# EUROPÄISCHE PATENTSCHRIFT

(11) **EP 1 938 885 B1**
(45) Veröffentlichungstag und Bekanntmachung des Hinweises auf die Patenterteilung: **21.07.2010**
(21) Anmeldenummer: 07024051.0
(22) Anmeldetag: 12.12.2007
(51) Int. Cl.: B01D 46/48

(54) **Filteranlage zum Abscheiden von Stäuben aus Gasen**
Filter device for separating dust particles from gases
Installation de filtration pour séparer la poussière d'un gaz

(30) Priorität: 22.12.2006 DE 102006061256
(43) Veröffentlichungstag der Anmeldung: 02.07.2008
(73) Patentinhaber: Fette GmbH, 21493 Schwarzenbek (DE)
(72) Erfinder: Römer, Harald, 21465 Reinbek (DE); Nuppenau, Detlef, 23911 Salem (DE); Krüger, Eugen, 21493 Schwarzenbek (DE); Schmidt, Dieter, 22767 Hamburg (DE); Markl, Michael, 21493 Grabau (DE); Granzow, Bernd, 21493 Grabau (DE); Mannshardt, Jens, 23920 Ratzeburg (DE)
(74) Vertreter: Hauck Patent- und Rechtsanwälte

(56) Entgegenhaltungen:
- WO-A-90/07369
- GB-A- 1 214 872
- US-A- 2 892 512
- US-A- 4 759 781

## Beschreibung

Die Erfindung bezieht sich auf eine Filteranlage zum Abscheiden von Stäuben aus Gasen nach dem Oberbegriff des Patentanspruchs 1.

Es ist bekannt, daß derartige Filteranlagen eine Vielzahl von Filtereinheiten aufweisen, die parallel an eine Leitung für Rohgas und an eine Leitung für Reingas angeschlossen sind. Jede Filtereinheit enthält zumeist eine Mehrzahl von sogenannten Filterkassetten, die nacheinander vom Rohgasstrom durchströmt sind, wobei die Strömungsrichtung üblicherweise von unten nach oben erfolgt. Die abgeschiedenen Staubpartikel lagern sich am Filter ab und bilden einen Filterkuchen. Durch Anwachsen des Filterkuchens steigt der Strömungswiderstand der Filterkassette. Wird darin ein bestimmter Differenzdruck überschritten, findet automatisch eine Reinigung der Filterkassette statt, beispielsweise auf pneumatischem Wege. Der abgereinigte Filterkuchen wird in einem Sammelraum unterhalb der Filterkassetten aufgefangen und anschließend aus der Filteranlage entnommen.

Es ist bekannt, unterhalb jedes Sammelraums einer Filtereinheit ein Sammelgefäß aufzustellen, in das der abgereinigte Filterkuchen abgefüllt wird. Eine derartige Handhabung ist verhältnismäßig aufwendig, da für jede Filtereinheit ein Sammelgefäß vorgesehen werden muß, das von Zeit zu Zeit gegen ein leeres auszuwechseln ist.

Es ist jedoch auch bekannt, wie aus Dokument WO 9 007 369, sämtliche Auslaßöffnungen der Sammelräume miteinander zu verbinden und die Verbindungsleitung zu einem zentralen Staubsammler zu führen. Eine zusätzliche Fördereinrichtung dient zum Transport des Staubs in den zentralen Staubsammler. Bei dieser Maßnahme ist der operative Aufwand verhältnismäßig groß.

Der Erfindung liegt die Aufgabe zugrunde, eine Filteranlage zum Abscheiden von Stäuben aus Gasen zu schaffen, mit der eine ähnliche Wirkung wie bei dem zuletzt beschriebenen zentralen Staubsammler erzielt wird, wobei jedoch ein deutlich verringerter operativer Aufwand zur Verfügung gestellt werden muß.

Diese Aufgabe wird durch die Merkmale des Patentanspruchs 1 gelöst.

Bei der erfindungsgemäßen Filteranlage sind die Staubaustragöffnungen aller Filtereinheiten bis auf eine mit einer gemeinsamen Sammelleitung verbunden. Die Sammelleitung ist mit dem Rohgasbereich der einen Filtereinheit verbunden. Vorzugsweise ist die Sammelleitung mit dem Sammelraum der einen Filtereinheit verbunden.

Bei der Erfindung wird von der Kenntnis ausgegangen, daß im Rohgasbereich jeder Filtereinheit ein Unterdruck herrscht. Diesen Unterdruck benutzt die erfindungsgemäße Filteranlage, um Staub aus den Sammelräumen der anderen Filteranlagen in den Sammelraum der einen Filtereinheit zu transportieren. Somit ist die eine Filtereinheit mit einem zentralen Staubsammelraum ausgerüstet.

Ein Ausführungsbeispiel der Erfindung wird nachfolgend anhand einer Zeichnung näher erläutert:

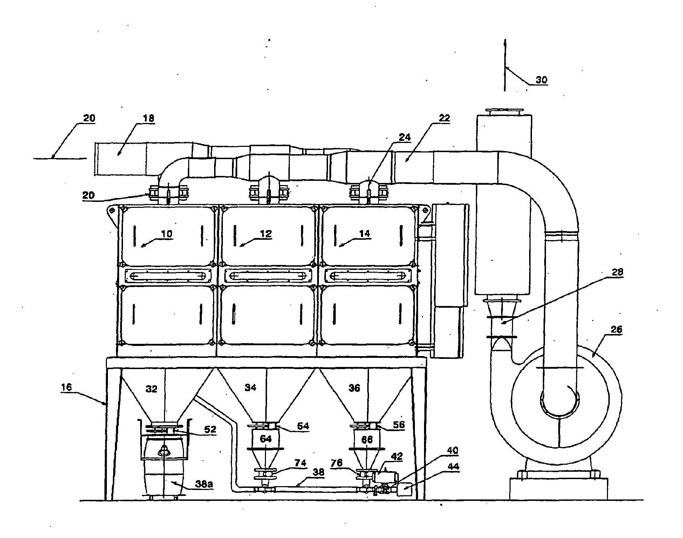

Die einzige Figur zeigt schematisch eine Filteranlage nach der Erfindung in Seitenansicht.

In der in der Figur gezeigten Filteranlage sind drei Filtereinheiten 10, 12 und 14 nebeneinander angeordnet. Sie stehen auf einem gemeinsamen Gestell 16. Eine erste Leitung 18 ist über Anschlüsse 20 mit dem oberen Ende der Filtereinheiten 10 bis 14 verbunden. Die Leitung 18 ist eine sogenannte Rohgasleitung. Sie wird gemäß Pfeil 20 mit einer Quelle für Rohgas, d.h. staubbelastetes Gas, beschickt. Eine Reingasleitung 22 ist über entsprechende Anschlüsse 24 mit dem Ausgang der Filtereinheiten 10 bis 14 verbunden. Die Reingasleitung 22 ist mit dem Eingang eines Gebläses 26 verbunden, dessen Ausgang 28 zur Atmosphäre geht, wie bei 30 angedeutet. Am unteren Ende jeder Filtereinheit 10 bis 14 ist ein Trichter 32, 34, 36 angeordnet. Jeder Trichter 32, 34, 36 hat eine Staubaustrittsöffnung, die durch eine Klappe 52, 54, 56 verschlossen werden kann. Unterhalb der Klappe 54, 56 befindet sich ein Staubsammler 64, 66, der die anfallenden Stäube während der Filtration und des Filterreinigungsprozesses aufnimmt. Optional kann unterhalb der Staubsammler 64, 66 eine zweite Klappe 74, 76 vorgesehen sein, die die Verbindung zur Sammelleitung 38 herstellt und während der geöffneten Position der Klappe 54, 56 den Durchgang zur Sammelleitung 38 verschließt. Die Sammelleitung 38 verbindet die Staubsammler 64, 66 bzw. deren Staubaustrittsöffnung miteinander.

Das eine Ende der Sammelleitung 38 ist mit dem Trichter 32 der Filtereinheit 10 verbunden. Unterhalb der Filtereinheit 10 bzw. des Trichters 32 ist ein Auffanggefäß 38a angeordnet. Der Sammelraum 32 ist mithin zentraler Sammelraum für alle Filtereinheiten 10 bis 14, deren Staub bzw. Filterkuchen im Gefäß 38 aufgefangen wird. Dies geschieht dadurch, daß im Sammelraum 32 ein Unterdruck im Betrieb der Filteranlagen herrscht. Üblicherweise wird bei derartigen Filtereinheiten 10-14, an die der Eingang des Gebläses 26 angeschlossen ist, ein Kanal nach unten zur untersten Filterkassette geleitet. Damit herrscht der Unterdruck, der eine Strömung durch die Filterkassetten bewirkt, auch im Sammelraum 32. Dadurch wird der Staub aus den anderen Sammelräumen 34, 36 angesaugt und in den Sammelraum 36 gefördert. Zu diesem Zweck muß jedoch die Sammelleitung 38 am anderen Ende offen sein. Ein Ventil 40, das von einer Servobetätigung 42 betätigbar ist, ist über einen Filter 44 mit Atmosphäre verbunden. Das Ventil 40 wird geöffnet, wenn Staub aus den Sammelräumen 34, 36 in den Sammelraum 32 gefördert werden soll.

## Patentansprüche

1. Filteranlage zur Abscheidung von Stäuben aus Gasen, mit einer Mehrzahl von Filtereinheiten (10, 12, 14), die parallel an eine Leitung für Rohgas und deren Ausgänge parallel an eine Leitung für Reingas angeschlossen sind, wobei an die Leitung für Reingas ein. Sauggebläse angeschlossen ist, ferner mit einer Vorrichtung zum Reinigen der Filtereinheiten, wobei jede Filtereinheit einen unteren Sammelraum (32, 34, 36) für den Filterkuchen aufweist mit einer Austragöffnung mit Verschluß am unteren Ende des Sammelraums, **dadurch gekenntzeichnet, daß** die Staubaustragöffnung aller Filtereinheiten (12, 14) bis auf eine bestimmte (10) mit einer gemeinsamen Sammelleitung (38) verbunden sind und die Sammelleitung (38) mit dem Rohgasbereich der bestimmten Filtereinheit (10) verbunden ist.

2. Filteranlage nach Anspruch 1, **dadurch gekennzeichnet, daß** die Sammelleitung (38) mit dem Sammelraum (32) der bestimmten Filtereinheit (10) verbunden ist.

## Claims

1. A filtering plant for removing dusts from gases, with a plurality of filter units (10, 12, 14), which are parallel connected to a line for crude gas and the outlets thereof are parallel connected to a line for purified gas, wherein an extraction blowing engine is connected to the line for purified gas, further with an apparatus for cleaning the filter units, wherein each filter unit comprises a collecting space (32, 34, 36) for the filter cake with a discharge opening with flap on the lower end of the collecting space, **characterised in that** the dust discharge openings of all the filter units (12, 14) except a specific one (10) are connected to a common collecting main (38) and the collecting main (38) is connected to the crude gas region of the specific filter unit (10).

2. A filtering plant according to claim 1, **characterised in that** the collecting main (38) is connected to the collecting space (32) of the specific filter unit (10).

## Revendications

1. Installation de filtration pour séparer la poussière d'un gaz, avec une pluralité d'unités de filtration (10, 12, 14) qui sont raccordées parallèlement à une conduite pour gaz brut et dont les sorties sont raccordées parallèlement à une conduite pour gaz pur, dans laquelle un ventilateur extracteur est raccordé à la conduite pour gaz pur, en outre avec un dispositif pour nettoyer les unités de filtration, dans laquelle chaque unité de filtration présente un espace collecteur (32, 34, 36) inférieur pour le gâteau de filtre, avec une ouverture de décharge avec fermeture à l'extrémité inférieure de l'espace collecteur, **caractérisée en ce que** l'ouverture de décharge de poussière de toutes les unités de filtration (12, 14) à l'exception d'une unité de filtration définie (10) sont raccordées à une conduite collectrice (38) commune et la conduite collectrice (38) est raccordée à la zone de gaz brut de l'unité de filtration définie (10).

2. Installation de filtration selon la revendication 1, **caractérisée en ce que** la conduite collectrice (38) est raccordée à l'espace collecteur (32) de l'unité de filtration définie (10).
